# EUROPEAN PATENT APPLICATION

(11) **EP 1 338 973 A2**
(43) Date of publication of application: **27.08.2003**
(21) Application number: 03250816.0
(22) Date of filing: 10.02.2003
(51) Int. Cl.: G06F 13/40, G06F 3/06

(54) **Use of the universal serial bus as an internal architecture within ide disk array**

(30) Priority: 13.02.2002 US 75121
(71) Applicant: QUANTUM CORPORATION, Milpitas, CA 95035 (US)
(72) Inventor: Moon, William G., Provo, Utah 84604 (US); Bolt, Thomas, Encinitas, California 92024 (US)
(74) Representative: Charig, Raymond Julian

(57) **Abstract**

A data storage system that has one or more IDE disk drives, each IDE disk drive connected to a USB to IDE controller, and the USB to IDE controllers are connected to one or more USB controllers. Within the data storage system (array), USB to IDE controllers are integrated into disk drive carriers. The logical interface presented to the storage array is strictly USB, and the insertion or removal of the drive carrier corresponds directly to USB device insertion/removal from the USB bus. Hubs can be used to associate up to 127 USB devices to a single USB controller, and multiple USB controllers may be utilized to increase overall system. Using the simple four wire interface of USB and the extend lengths of USB relative to IDE, a passive center plane design for the storage array is made possible by the present invention. Using USB as an internal interconnect allows the use of inexpensive IDE disk drives within a storage array with simplified cabling/signal routing, "hot plugging", and passive center plane.

## Description

### Field of the Invention

The present invention related to data storage devices, and in particular to disk arrays.

### Background of the Invention

The Integrated Drive Electronics (IDE) bus is commonly implemented as a secondary bus to interface mass storage devices such as hard disk drives, floppy disk drives, and CD ROM drives. The IDE bus remains the most widely-adopted bus architecture for mass storage devices in personal computer systems. An IDE controller can support a maximum of up to two IDE devices. If two IDE devices connect to one IDE controller, one device is designated as the "master" and the other as the "slave," according to the IDE protocol. Also, if two IDE controllers are incorporated simultaneously into the same computer, one bus controller is designated as the "primary" with the other as the "secondary." The master/slave and primary/secondary designations facilitate the complex negotiations between multiple IDE devices and buses.

Existing disk drive arrays utilize multiple IDE disk drives for cost savings compared to SCSI or Fibre Channel disk drives. When building storage arrays using IDE disk drives, several limitations of the IDE bus become immediately apparent. The IDE bus only allows two IDE devices per bus, requiring the arrays to include many IDE buses. The IDE bus is limited to a length of 18 inches for high speed applications (UDMA 66, UDMA 100, UDMA 133). The IDE bus has no provisions for "hot plugging" of devices. And, the IDE bus is a parallel bus so that trace routing becomes complex.

Such conventional storage arrays use multiple IDE controllers, ASICs, or FPGAs. Owing to the bus length limitations of IDE, such storage arrays must locate the controllers as close as possible to the disk drives themselves, typically on a center plane of the storage enclosure. This leads to a highly complex and active center plane, severely impacting the field serviceability of the devices. Furthermore, additional circuitry must be added to handle "hot plugging" of failed and replacement disk drives because "hot plugging" is outside the scope of IDE bus specification, subject to incompatibilities with IDE disk drives.

### Brief Summary of the Invention

The present invention alleviates the above limitations. One type of bus architecture, the Universal Serial Bus (USB), typically supports peripheral devices external to a computer, such as video cameras, modems, joysticks, a keyboard and mouse, and other input/output devices via a special USB connector. In addition to simultaneously supporting a large number of peripheral devices, the USB architecture also supports hot plugging of peripheral devices. A Universal Serial Bus operates using a central USB controller to arbiter and route all bus traffic.

The USB bus has relatively low throughput compared to Fibre Channel or ultra SCSI, however due to the low cost of USB components, it is highly desirable in applications where either a large number of relatively slow devices are used, or, a large number of relatively fast devices are used but with only a subset active at any given time.

In one embodiment, the present invention provides a system including one or more IDE devices, each IDE device connected to a USB to IDE controller, wherein the USB to IDE controllers are connected to one or more USB controllers. USB is a high speed low cost serial bus architecture, that provides "hot plugging", supports up to 127 devices, and supports cable lengths up to 15 meters. The USB architecture is a point to point, shared bandwidth architecture. Hub devices may be used to connect additional devices to a USB controller.

In one version, a data storage system according to the present invention includes multiple IDE disk drives, wherein each disk drive is connected to a USB to IDE controller. Within the data storage system (array), USB to IDE controllers are integrated into disk drive carriers. The logical interface presented to the storage array is strictly USB, and the insertion or removal of the drive carrier corresponds directly to USB device insertion/removal from the USB bus. Hubs can be used to associate up to 127 USB devices to a single USB controller, and multiple USB controllers may be utilized to increase overall system. Using the simple four wire interface of USB and the extend lengths of USB relative to IDE, a passive center plane design for the storage array is made possible by the present invention. Using USB as an internal interconnect allows the use of inexpensive IDE disk drives within a storage array with simplified cabling/signal routing, "hot plugging", and passive center plane.

### Brief Description of the Drawings

These and other features, aspects and advantages of the present invention will become understood with reference to the following description, appended claims and accompanying figures where:
FIG. 1A shows an example block diagram of an embodiment of a system according to the present invention;
FIG. 1 B shows an example block diagram of another embodiment of a system according to the present invention;
FIG. 2 shows a perspective view of a schematic diagram of an example data storage system according to another aspect of the present invention;
FIG. 3 shows a more detailed view of the disk drives in FIG. 2;
FIG. 4 shows a block diagram of the architecture of the data storage system of FIG. 2; and
FIG. 5-6 show flowcharts of the steps of different embodiments of the method of using the Universal Serial Bus as an Internal Architecture within a storage system.

### Detailed Description of the Invention

The present invention utilizes the Universal Serial Bus (USB) serial bus architecture as described herein. The USB architecture, typically supports peripheral devices, such as video cameras, modems, joysticks, a keyboard and mouse, and other input/output devices via USB connectors. In addition to simultaneously supporting a large number of peripheral devices, the USB architecture also supports "hot plugging" of peripheral devices. A Universal Serial Bus operates using a central USB controller to arbiter and route all bus traffic.

For example, USB 2.0 is a high speed (480 megabits/second) low cost serial bus architecture, that provides "hot plugging", supports up to 127 devices, and supports cable lengths up to 15 meters. Further, the USB architecture is a point to point, shared bandwidth architecture, wherein USB hub devices may be used to connect additional USB devices to a USB controller.

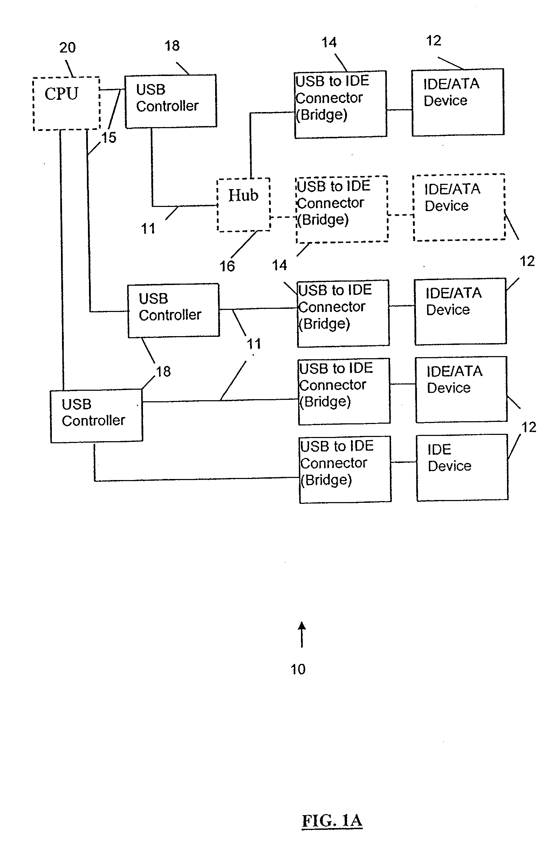

Referring to FIGs. 1A-B, example block diagrams of two embodiments of a USB system 10 according to the present invention is shown. The system 10 comprises one or more IDE devices 12 (as used herein, IDE device comprises an IDE/ATA device), one or more USB-to-IDE controllers 14 (USB-to-ATA bridge or protocol converter) corresponding to the IDE devices 12, optionally one or more USB hubs 16 as needed, and one or more USB controllers 18 (preferably USB 2.0), that can be connected to a processor (CPU) 20, interconnected as shown. A USB bus 11 is the connection between the USB controllers 18 and the USB HUBS 16, or the connection between the USB hub 16 and the USB-to-ATA bridges 14, or a direct connection between the USB controller 18 and the USB-to-ATA bridge 14. The connection 15 between the USB controller 18 and the CPU 20 can be a PCI bus.

Each IDE device 12 can comprise any of several devices such as disk drive (HDD), CD ROM, CR RW, DVD, Tape device, etc. Therefore, the present invention is not limited to a disk drive (HDD) utilized as an IDE device in the description herein. Further, different IDE devices can be used in the system.

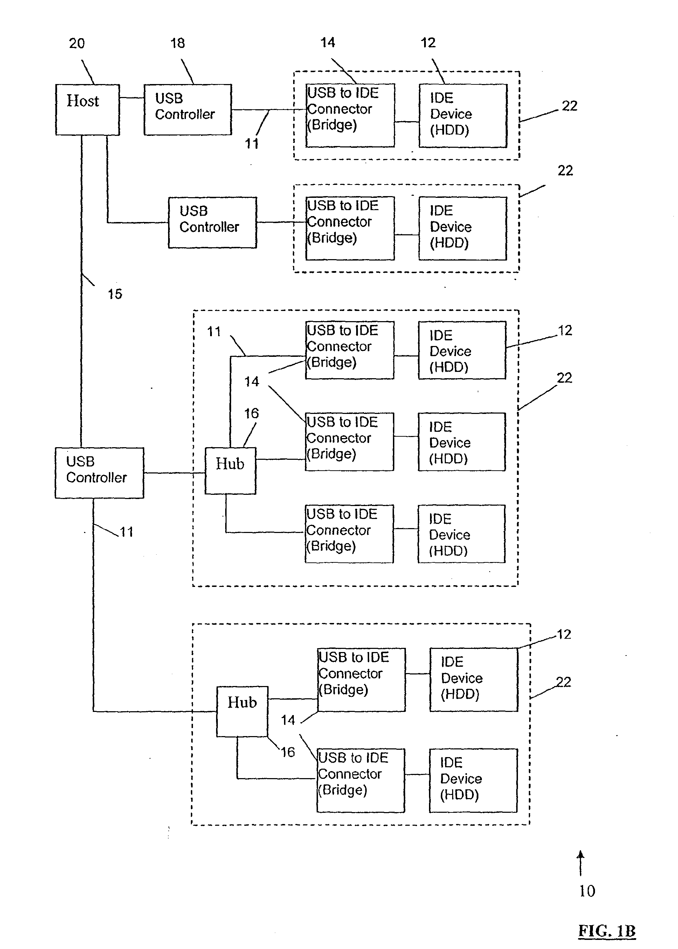

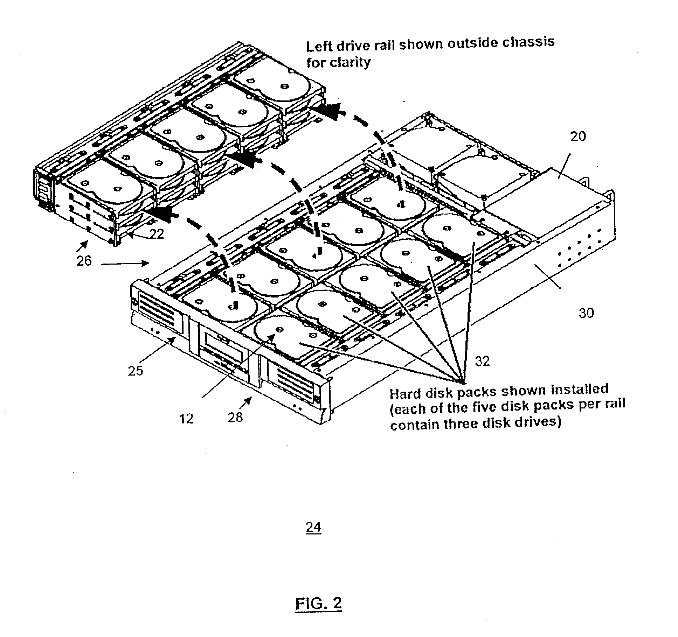

Referring to FIG. 2, the present invention is shown in one embodiment as a data storage array 24, comprising multiple IDE disk drives 12, each connected to an USB to IDE controller 14 (USB-to-IDE bridge or protocol converter). The USB to IDE converters 14 can be connected to the USB controllers 18 directly, or via a hub 16, as shown in FIGs. 1A-B. In the example of FIG. 2, within the storage array 24, the USB to IDE controllers 14 are integrated into disk drive carriers 22 (e.g., FIG. 1B). Each IDE disk drive 12 is connected to a USB controller 18 or USB hub 16 via an USB to IDE controller 14, thereby appearing as a USB device to the USB controller 18. The logical interface presented to the storage array 24 is USB, and the insertion or removal of a disk drive carrier 22 corresponds directly to USB device insertion/removal from the USB bus ("hot plugging").

Further, multiple USB controllers 18 may be utilized to increase overall system bandwidth. Using the simple four wire interface of the USB architecture and the extend lengths of USB connections relative to IDE, the present invention allows design of a passive center plane design for the storage system 24.

In one version, no cables are actually used, rather all USB signals are carried by printed circuit board traces and non-standard connectors are used. Control software can be utilized, such as in one configuration where only e.g. 480 Mbit/sec devices are used, and split transactions on the hub devices need not be supported. Likewise, because the USB bus 11 is an internal bus in this version of the invention, it is known when IDE devices 12 can be inserted or removed. For example, devices 12 may only be inserted (plugged in) or removed (unplugged) when specified criteria are met (e.g., when the front panel 25 is removed from the data storage system 24). As such, there is no need to constantly poll the bus 11 to determine device insertion or removal when it is known that e.g., the front cover 25 is in place (in one example, use of a "hall effect" switch allows determination of when the front panel 12 has been removed). This reduces a substantial amount of bus overhead, which translates into higher throughput. In another version, based on standard USB implementations, routine polling for device insertion/removal takes place.

The USB system herein allows easy connection of a wide variety of devices (e.g., storage devices), providing user-friendly "hot plugging". The present invention allows "hot swap" of devices, whereby e.g. disk drives 12 can be plugged into the storage array 24 or removed without needing to power the system down or doing anything before the change is made.

Hubs 16 may be used to associate up to 127 USB devices to a single USB controller 18 (multiple devices can easily be added to a single USB controller by chaining the devices together using hubs). As such, a hub is a USB device which extends the number of USB ports to connect other USB devices. The maximum number of attachable devices is reduced by the number of hubs on the bus. Hubs are self- and/or bus powered full speed devices. Typically the physical ports of the host controller are handled by a virtual root hub. This hub is simulated by the host controller's device driver and helps to unify the bus topology. As such, every port can be handled in the same way by the USB subsystem's hub driver.

In one example, a USB controller 18 includes the root that is the signal source, and the storage devices have a downstream hub to terminate the signal. The hubs 16 do all of the communication. Intermediate hubs can be included in a configuration which can optionally provide additional power to their downstream hubs or simply distribute what is provided by the upstream hub.

When a disk drive 12 with IDE to USB connector 18 is connected to the USB controller/bus, the root hub senses the presence of the new device and initially communicates with the device on e.g. "pipe 0," the default physical device communications channel. Pipes are the data sub-bands of the hub architecture that maintain the physical connections of devices. Once a device is recognized, the root hub interrogates the device to find out what it is and what it is capable of on pipe 0.

All of the devices 12 on the USB to IDE ports/connectors 18 are then enumerated and each is assigned a unique device number, which also includes a corresponding pipe number for physical device communications. The host 20 loads the program instructions to control the devices 12 and handles its information flow. The hubs 16 are then running and information is passed in and out of the USB controller 18 via the signal leads. The enumeration process is initiated every time a device is plugged into or removed from the USB bus.

There are different types of USB devices as they can be used for different purposes. First a device can be self powered, bus powered or both. The USB can provide a power supply up to e.g. 500mA for its devices. If there are only bus powered devices on the bus the maximum power dissipation could be exceeded and therefore self powered devices exist. Such devices need to have their own power supply. Devices that support both power types can switch to self powered mode when attaching an external power supply. In examples where the system is self-contained (e.g., FIG. 2), there is no need for "self powered bus" feature of USB.

The maximum communication speed can differ for particular USB devices. The USB specification decides between low speed and full speed devices. Low speed devices (such as mice, keyboards, joysticks etc.) communicate at 1.5MBit/s and have only limited capabilities. Full speed devices (such as audio and video systems) can use up to 90% of the 12Mbit/s which is about 10Mbit/s including the protocol overhead. Further, USB 2.0 provides a transmission rate of 480 Mbits/sec, or a theoretical maximum of 60 Mbytes/sec. Disk devices 12 can use the bulk message protocol of USB, and accounting for the protocol overhead, the theoretical maximum throughput can be 53 Mbytes/sec.

Using USB as an internal interconnect allows the use of inexpensive IDE disk drives 12 within a drive array 24 with simplified cabling/signal routing, "hot plugging", and totally passive center plane.

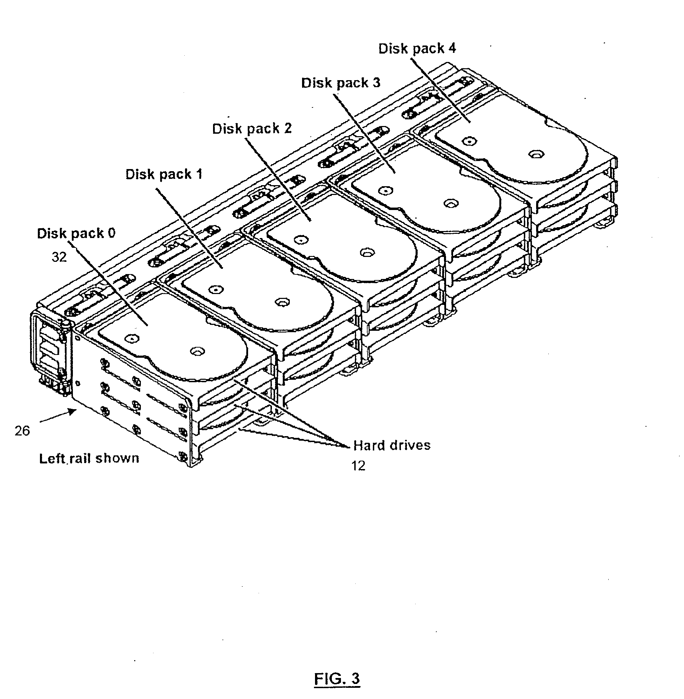

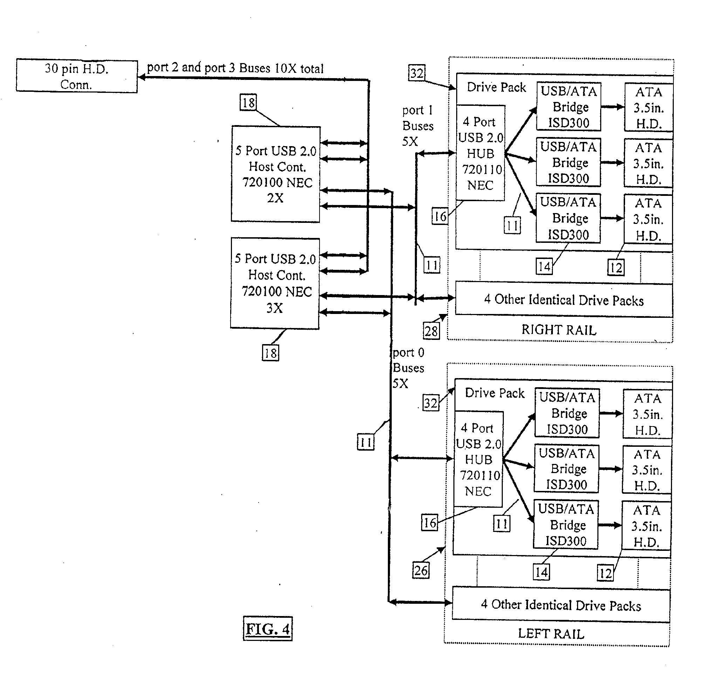

The present invention is applicable to different systems that utilize IDE devices (e.g., disk drives). In FIG. 4, the example data storage system 24 comprises three main components: a controller (e.g., host or CPU) 20, left rail disk drives 26 and right rail disk drives 28, in a housing 30. As shown in FIG. 3, each rail includes e.g. five disk drive packs 32, and each disk drive pack 32 includes e.g. three disk drives 12, wherein each disk drive 12 is an example of an IDE device. Referring to the example block diagram in FIG. 4, each IDE disk drive 12 in a drive pack 32 is to a USB to ATA protocol converter/bridge (i.e., IDE to USB controller) in the drive housing/carrier. The USB to ATA converters for each drive pack are connected to a USB hub, and the USB hubs are connected to USB host controllers as shown.

In this example, the data storage system 14 is in effect a "virtual library" system utilizing inexpensive ATA disk drives 12 to emulate a tape library. It is highly desirable to provide data storage (e.g., for data backup) as cheaply as possible, and to that end the use of ATA disk drives 12 is more attractive than either SCSI or Fibre channel disk drives.

Conventionally, USB architecture has been used for external attachment of peripheral devices using physical cables. However, according to the present invention, the USB architecture is utilized in the internal interconnect topology for multiple IDE/ATA devices12 (e.g., a disk array data storage device), alleviating disadvantages of conventional ATA disk arrays. As such, the present invention eliminates ATA cable/signal length limitations, provides hot plugging (lacking in ATA specifications) and eliminates ATA signal routing issues. Using hot plugging, individual disk drive carriers 22 including a disk drive 12 and the connected USB-to-IDE bridge 14 (and optional hub 16) can be connected/disconnected to/from the data storage system 24. As shown in FIG. 1B, an HDD carrier 22 can comprise a single USB to IDE bridge 14 and its associated disk drive 12, or the combination of a hub 16 and several (e.g., 2,3,...) USB to IDE bridges 14 and their associated IDE disk drives 12.

USB supports hot plugging, and plug and play. Plug and play is accomplished via device descriptors included in the USB standard which allow a host system to query the type of device attached as well as model and vendor specifics. This allows a host operating system to determine what devices are attached and to load the proper device drivers automatically. Hot plugging is the ability to attach (plug) or remove (unplug) devices from the system while the system is running (operating). This is very important for disk arrays, because it allows the replacement of failed components while the system is still running (i.e., without disturbing the normal operation of the host system). Conventional disk array data storage systems using RAID protection can only tolerate one disk drive failure within a RAID set, so the system is vulnerable to data loss for the period of time after the first disk drive fails until it is replaced. Therefore it is highly desirable to replace failed components as quickly as possible. Hot plugging according to the present invention allows this replacement while the system is still operational without waiting for the host to become quiescent.

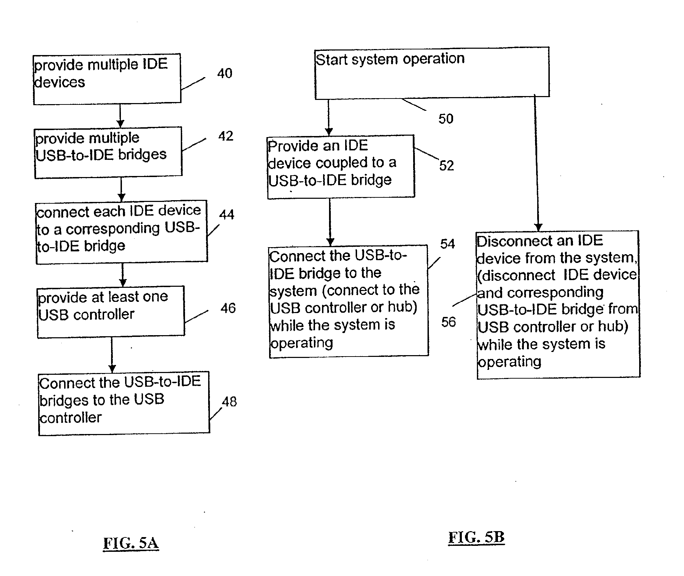

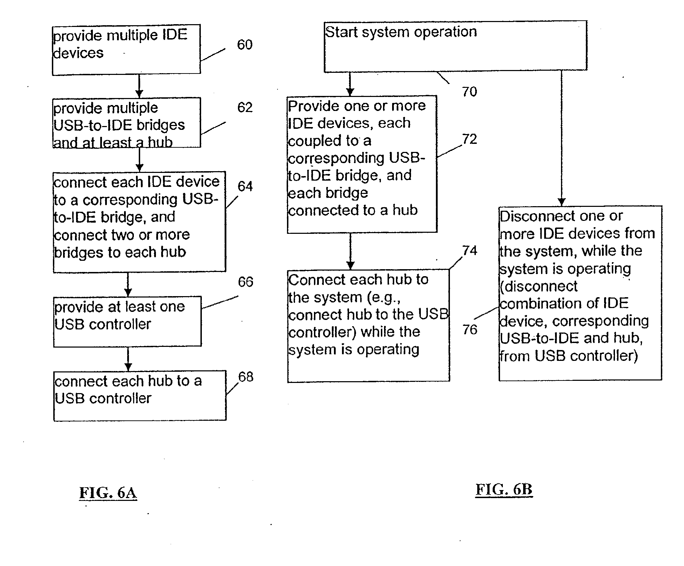

FIGs. 5A-B and 6A-B show example flowcharts of embodiments of the method of the present invention. Flowcharts of FIGs. 5A-B are described herein in conjunction with FIG. 1A, wherein in one embodiment, the method the present invention includes the steps of: Providing multiple IDE devices 12 (step 40), providing multiple USB-to-IDE bridges 14 (step 42), connecting each IDE device 12 to a corresponding USB-to-IDE bridge 14 (step 44), providing at least one USB controller 18 (step 46) and connecting the bridges to the USB controller 18 (step 48). According to the steps in FIG. 5B, the system 10 operation is started (step 50), and thereafter an additional IDE device 12 is coupled to an additional USB-to-IDE bridge 14 (step 52) and connected to the system 10 (e.g., connect bridge 14 to the USB controller 18 or hub 16), while the system 19 is operation (step 54). Further, while the system 10 is operating an IDE device 12 is disconnected from the system 10 (e.g., disconnect IDE device 12 and correspondingUSB-to-IDE bridge 14 from USB controller 18 or hub 16) (step 56).

Flowcharts of FIGs. 6A-B are described herein in conjunction with FIG. 1 B, wherein in another embodiment, the method the present invention includes the steps of: Providing multiple IDE devices 12 (step 60), providing multiple USB-to-IDE bridges 14 and at least one hub 16 (step 62), connecting each IDE device 12 to a corresponding USB-to-IDE bridge 14 and connecting two or more bridges 14 to each hub 16 (step 64), providing at least one USB controller 18 (step 66) and connecting each hub 16 to the USB controller 18 (step 68). According to the steps in FIG. 6B, the system 10 operation is started (step 70), and thereafter additional IDE devices 12 coupled to corresponding USB-to-IDE bridges 14 and hub 16 (step 72) are connected to the system 19 (e.g., connect hub 16 to the USB controller 18), while the system is operation (step 74). Further, while the system 10 is operating one or more IDE devices 12 are disconnected from the system 10 (e.g., disconnect combination of IDE devices 12 corresponding USB-to-IDE bridges 14 and hub 16, from USB controller 18) (step 76).

The present invention has been described in considerable detail with reference to certain preferred versions thereof; however, other versions are possible. Therefore, the spirit and scope of the appended claims should not be limited to the description of the preferred versions contained herein.

## Claims

1. A USB system for data communication between a processor and IDE devices, comprising:
a plurality of IDE devices;
a plurality of USB-to-IDE bridges, wherein each IDE device is connected to a respective USB-to-IDE bridge; and
a USB controller, wherein the USB-to-IDE bridges are connected to the USB controller, whereby the processor can communicate with the IDE devices via the USB controller.

2. The system of claim 1, wherein at least one of the IDE devices comprises a hard disk drive.

3. The system of claim 1, further comprising one or more USB hubs, each USB hub connected between two or more USB-to-IDE bridges and a USB controller.

4. The system of claim 1, wherein each IDE device can be utilized in hot plugging.

5. The system of claim 1, wherein one or more IDE devices can be disconnected from the system while the system is operating.

6. The system of claim 1, wherein at least one additional IDE device coupled to at corresponding USB-to-IDE bridge can be connected to the USB controller while the system is operating.

7. The system of claim 1, further comprising at least one USB hub connected between a number of the USB-to-IDE bridges and one of the USB controllers, whereby the processor can communicate with the IDE devices via the USB controller and the USB hub.

8. The system of claim 7, wherein one or more IDE devices can be disconnected from the system while the system is operating.

9. The system of claim 3, wherein at least one additional IDE device coupled to a corresponding USB-to-IDE bridge can be connected to one of the hubs while the system is operating.

10. The system of claim 3, wherein at least one additional IDE device coupled to a corresponding USB-to-IDE bridge and associated hub, can be connected to the USB controller while the system is operating.

11. The data storage system of claim 3, wherein at least one IDE device coupled to a corresponding USB-to-IDE bridge and associated hub, can be disconnected from the USB controller while the system is operating.

12. A data storage system, comprising the USB system of any one of claims 1 and 3 to 11 in which the IDE devices are storage devices.

13. The data storage system of claim 12, further comprising a carrier for each IDE data storage device, such that each IDE storage device and corresponding USB-to-IDE bridge are stored in the respective carrier.

14. A method for connecting multiple IDE devices to a processor for data communication, comprising the steps of:
providing multiple USB-to-IDE bridges;
connecting each IDE device to a respective one of the USB-to-IDE bridges;
providing a USB controller; and
connecting the USB-to-IDE bridges to the USB controller, whereby the processor can communicate with the IDE devices via the USB controller.

15. The method of claim 14, wherein at least one of the IDE devices comprises a disk drive.

16. The method of claim 14, further comprising the steps of hot plugging one or more IDE devices to the USB-to-IDE bridges.

17. The method of claim 14, further comprising the steps of disconnecting one or more of the IDE devices from the system while the system is operating.

18. The method of claim 14, further comprising the steps of connecting at least one additional IDE device coupled to a corresponding USB-to-IDE bridge, to the USB controller while the system is operating.

19. The method of claim 14, further comprising the steps of:
providing at least one USB hub;
connecting each hub to a USB controller; and
connecting two or more USB-to-IDE controllers to each hub, such that each hub is connected between a USB controller and two or more USB-to-IDE controllers.

20. The method of claim 19, further comprising the steps of disconnecting one or more of the IDE devices from the system while the system is operating.

21. The method of claim 19, further comprising the steps of connecting at least one additional IDE device coupled to a corresponding USB-to-IDE bridge, to one of the hubs while the system is operating.
